# EUROPÄISCHE PATENTSCHRIFT

(11) **EP 2 883 117 B1**
(45) Veröffentlichungstag und Bekanntmachung des Hinweises auf die Patenterteilung: **28.08.2019**
(21) Anmeldenummer: 13737599.4
(22) Anmeldetag: 16.07.2013
(51) Int. Cl.: G05G 5/06, G05G 5/05, G05G 9/047, G05G 1/04, F16H 59/02, F16H 59/10, F16H 61/24

(54) **BEDIENELEMENT MIT MAGNETHAPTIK**
CONTROL ELEMENT WITH MAGNETIC HAPTICS
ÉLÉMENT DE COMMANDE UTILISANT UNE HAPTIQUE MAGNÉTIQUE

(30) Priorität: 10.08.2012 DE 102012214315; 04.12.2012 DE 102012222237
(43) Veröffentlichungstag der Anmeldung: 17.06.2015
(73) Patentinhaber: Preh GmbH, 97616 Bad Neustadt a. d. Saale (DE)
(72) Erfinder: SCHMIDT, Benedikt, 97616 Bad Neustadt a.d.Saale (DE); KRAMLICH, Andreas, 97616 Bad Neustadt a.d. Saale (DE); LUST, Matthias, 97456 Dittelbrunn (DE)
(74) Vertreter: Lohmanns, Bernard
(86) Internationale Anmeldenummer: PCT/EP2013/064986
(87) Internationale Veröffentlichungsnummer: WO 2014/023529

(56) Entgegenhaltungen:
- EP-A1- 1 429 056
- DE-A1-102007 058 001
- JP-A- S61 157 855
- JP-U- H02 105 651
- KR-A- 20050 121 795

## Beschreibung

Die Erfindung betrifft ein Bedienelement, insbesondere einen Gangwahlhebel eines manuellen oder automatischen Getriebes. Bisher wurde die haptische Rückmeldung, auch taktiles Feedback genannt, im Wesentlichen mittels in mechanischem Wirkeingriff stehender Rastmittel oder Federn erzeugt. Darüber hinaus ist es bekannt, Magnete vorzusehen, um ein haptisches Feedback zu erzeugen, wobei die Magnetkräfte unmittelbar zwischen dem für die Berührung durch den Bediener vorgesehenen, schwenkbaren Betätigungshebel und dem ruhenden Teil des Bedienelements erzeugt werden. Die magnetische Haptikerzeugung hat den Vorteil, dass sie verschleißarm ist. Nachteilig bei den bisher bekannten Bedienelementen mit magnetischer Haptikerzeugung ist, dass die Haptikerzeugung aufgrund des Platzbedarfs der Magnete und deren geringen Fernwirkung nur eingeschränkt stellungsabhängig variiert werden kann, insbesondere wenn mehrere ruhende Magnete entlang des Verstellweges des Betätigungshebels vorgesehen werden müssen.

Die Aufgabe der vorliegenden Erfindung besteht somit darin, die bekannten magnetisch arbeitenden Bedienelemente dahin gehend weiterzubilden, dass eine verbessert stellungsabhängige Haptikerzeugung ermöglicht wird. Diese Aufgabe wird durch ein Bedienelement gemäß Anspruch 1 gelöst. Eine entsprechend vorteilhafte Verwendung in einem Kraftfahrzeug ist Gegenstand des nebengeordneten Anspruchs. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Bedienelement, welches einen um eine erste Schwenkachse schwenkbar gelagerten Betätigungshebel mit einem bezüglich der ersten Schwenkachse dem Bediener zugewandten Abschnitt und einem dem Bediener abgewandten Betätigungshebelabschnitt aufweist. Der dem Bediener zugewandte Anschnitt ist beispielsweise im Wesentlichen stabförmig ausgebildet und weist beispielsweise an seinem äußersten Ende einen Knauf oder Knopf auf.

Erfindungsgemäß ist ferner ein um eine Mitnehmerschwenkachse schwenkbar gelagerter Mitnehmerhebel vorgesehen, wobei ein an dem Mitnehmerhebel befestigter erster Magnet vorgesehen ist. Bevorzugt handelt es sich bei dem Magneten um einen Permanentmagneten. Bevorzugt sind die Mitnehmerschwenkachse und die erste Schwenkachse parallel zueinander.

Erfindungsgemäß ist ferner ein erster Wirkeingriff zwischen Betätigungshebelabschnitt und Mitnehmerhebel vorgesehen, um ein synchrones Schwenken von Betätigungshebel und Mitnehmerhebel zu bewirken, sofern der Betätigungshebel durch einen Bediener verschwenkt wird.

Erfindungsgemäß sind mehrere ruhende, zweite Magnete, vorgesehen, die so angeordnet sind, dass beim Schwenken des Mitnehmerhebels der erste Magnet die Magnetfelder der zweiten Magnete ganz oder teilweise durchquert, um eine haptische Rückmeldung am Betätigungshebel zu erzeugen. Bevorzugt sind die mehreren zweiten Magnete beabstandet zueinander, entlang der durch die erste Schwenkachse definierten Schwenkrichtung angeordnet. Der Begriff haptische Rückmeldung ist weit auszulegen und umfasst auch ein Halten oder "Verrasten" des unbetätigten Betätigungshebels durch die magnetische Wechselwirkung zwischen dem ersten Magnet und dem betreffenden zweiten Magneten.

Der erste Wirkeingriff kann beliebig ausgebildet sein, erfindungswesentlich ist die resultierende synchrone Bewegung von Betätigungshebel und Mitnehmerhebel, wobei dabei ein spielbedingter und nicht zu vermeidender Totgang dem Begriff nicht auslegungshindernd entgegen stehen soll. Der Wirkeingriff kann jegliche Kopplung auch eine berührungslose Kopplung zwischen Betätigungshebel und Mitnehmerhebel beinhalten. Bevorzugt handelt es sich um einen berührungsbehafteten, mechanischen Wirkeingriff zwischen dem Mitnehmerhebel und dem Betätigungshebel. Bevorzugt umfasst der erste Wirkeingriff einen Zapfen und eine zugehörige, den Zapfen aufnehmende Ausnehmung, beispielswiese ein Langloch.

Es ist das der Erfindung zugrundeliegende Konzept, dass nicht primär ein am unmittelbar am Betätigungshebel angebrachter erster Magnet in magnetischer Wechselwirkung mit den zweiten, ruhenden Magneten, die für die Haptikerzeugung vorgesehen sind, steht, sondern die magnetische, für die Haptikerzeugung wesentliche magnetische Wechselwirkung zwischen dem Betätigungshebel und den ruhenden Magneten über den Mitnehmerhebel erfolgt.

Das Vorsehen eines Mitnehmerhebels hat den Vorteil, dass die Schwenkbewegung des Betätigungshebels durch konstruktive Auslegung beliebig über- bzw. untersetzt werden kann. Dies schafft die Möglichkeit, die Stärke der magnetischen Wechselwirkung zwischen erstem Magnet und zweiten Magneten durch die Hebelmechanik auf den Betätigungshebel zu transformieren und gleichzeitig das Schwenkmaß des Betätigungshebels auf das Schwenkmaß des Mitnehmerhebels zu transformieren. Die Erfindung ist nicht auf bestimmte Hebelverhältnisse und Hebelverläufe beschränkt.

Erfindungsgemäß sind ferner Mittel zur Detektion der Stellung von Betätigungshebel und/oder Mitnehmerhebel vorgesehen, um stellungsabhängig ein elektrisches Signal zu erzeugen. Beispielsweise erfolgt die Detektion berührungslos, wie optisch oder magnetisch. Erfindungsgemäß können ferner Mittel zur Rückstellung des Betätigungshebels in eine Ruhestellung vorgesehen sein. Die Ruhestellung ist beispielsweise die Mittenstellung bezüglich der Verschwenkbewegung des Betätigungshebels.

Erfindungsgemäß ist der Betätigungshebel um eine zweite, zur ersten Schwenkachse orthogonale Schwenkachse schwenkbar, beispielsweise mittels Kugel-Pfannen-Lagerung oder kardanischer Lagerung, gelagert und der Mitnehmerhebel ist in einer zu seiner Schwenkrichtung senkrechten Richtung bewegbar gelagert, um mittels des ersten Wirkeingriffs oder mittels eines zweiten Wirkeingriffs zwischen Betätigungshebelabschnitt und Mitnehmerhebel ein synchrones Bewegen des Mitnehmerhebels in der besagten zur Schwenkrichtung senkrechten Richtung durch Schwenken des Betätigungshebels um die zweite Schwenkachse zu bewirken. Der zweite Wirkeingriff ist beispielsweise durch einen Kugelzapfen und eine zugehörige, durch zwei Flanken vorgegebene, die Kugel aufnehmende Ausnehmung definiert.

Die Bewegung des Mitnehmerhebelarms in diese zusätzliche Richtung kann auch eine Schwenkbewegung sein. Bevorzugt ist der Mitnehmerhebel senkrecht zu seiner Mitnehmerschwenkachse jedoch translatorisch bewegbar, noch bevorzugter entlang der Mitnehmerschwenkachse, beispielsweise auf einem Zapfen des Bedienelements, verschiebbar, gelagert. Durch die Verschiebung entlang der Mitnehmerschwenkachse bleibt bei einer ausschließlichen Verschiebebewegung der lichte Abstand zwischen dem ersten Magneten und dem magnetisch wirksamen zweiten Magneten beibehalten, während beispielsweise deren Überdeckung variiert wird.

Der Abstand zwischen der Mitnehmerschwenkachse und dem äußersten Ende des ersten Magnets definiert einen Mitnehmerhebelarm und der Abstand zwischen der ersten Schwenkachse und dem ersten Wirkeingriff des Betätigungshebelabschnitts definiert einen Betätigungshebelarm. Dies vorausschickend, ist gemäß einer bevorzugten Ausgestaltung vorgesehen, dass das Hebelverhältnis von wirksamer Länge des Betätigungshebelarms zur wirksamen Länge des Mitnehmerhebelarms größer als 1 ist, bevorzugter im Bereich 2 bis 4 liegt, noch bevorzugter etwa drei beträgt. Im Vergleich zu einer Konstruktion ohne Mitnehmerhebelarm, also im Vergleich zu einem Betätigungshebel, dessen Betätigungshebelabschnitt den Mitnehmerhebelarm ersetzt, da er den ersten Magnet trägt, wird bei gleichbleibendem Abstand zwischen erstem und zweitem Magnet eine Verstärkung der haptischen Rückmeldung erreicht bzw. es kann vorteilhaft bei angestrebt gleichbleibender Rückmeldung der Abstand der Magnete vergrößert werden.

Bevorzugt unterscheiden sich wenigstens zwei der zweiten Magnete in ihrer Abmessung in der zur Mitnehmerschwenkachse parallelen Richtung, um beispielsweise die haptische Rückmeldung zu variieren.

Zur Erleichterung der Montage sind gemäß einer bevorzugten Ausführungsform die zweiten Magnete in einem gemeinsamen Magnetträger angeordnet.

Bevorzugt ist wenigstens einer der zweiten Magnete so ausgerichtet, dass er eine zur Mitnehmerschwenkachse parallele Ausrichtung seiner Pole aufweist, d.h. die kürzeste Linie vom Nord zum Südpol (Polrichtung) verläuft parallel zur Schwenkachse des Mitnehmers.

Bevorzugt weist der erste Magnet eine Abmessung in der zur Mitnehmerschwenkachse parallelen Richtung auf, die gleich oder größer ist als die entsprechende Abmessung des bezüglich dieser Abmessung kleinsten zweiten Magneten. Sind diese zweiten Magnete bezüglich dieser Abmessung gleich groß, ist der erste Magnet gleich oder größer in der entsprechenden Abmessung.

Bevorzugt sind in der Mittenstellung der Betätigungshebelabschnitt und der Mitnehmerhebel fluchtend angeordnet.

Bevorzugt ist der Betätigungshebel in einer Kulisse geführt. Gemäß einer weiteren vorteilhaften Ausgestaltung weist die Kulisse wenigstens zwei zur ersten Schwenkachse des Betätigungshebels orthogonale Gassen auf.

Bevorzugt weist die Kulisse ferner eine, noch bevorzugter genau eine, zur zweiten Schwenkachse orthogonale Verbindungsgasse auf.
Beispielsweise sind beim Schwenken des Betätigungshebels in der Verbindungsgasse der Betätigungshebelabschnitt und der Mitnehmerhebel fluchtend angeordnet.

Bevorzugt wird wobei beim Verschwenken des Betätigungshebels in der Verbindungsgasse der erste Magnet aus oder in das Magnetfeld des nächstbenachbarten zweiten Magnetes bewegt.

Die Erfindung betrifft ferner eine Verwendung des Bedienelements in einer der zuvor beschriebenen Ausgestaltungen in einem Kraftfahrzeug, insbesondere als Gangwahlhebel eines manuellen oder automatischen Getriebes.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1:: eine perspektivische Darstellung zur Veranschaulichung einer ersten Ausführungsform des erfindungsgemäßen Bedienelements;
- Fig. 2:: schematische Darstellung unterschiedlicher Schwenkstellungen um die erste Schwenkachse des Betätigungshebels des Bedienelements aus Figur1;
- Fig. 3:: die Mittenstellung des Betätigungshebels in zwei perspektivisch unterschiedlichen Ansichten;
- Fig. 4:: den aus der Mittenstellung um die zweite Schwenkachse verschwenkten Betätigungshebel aus Fig. 3 in zwei perspektivisch unterschiedlichen Ansichten;
- Fig. 5:: eine perspektivische Detailansicht des Mitnehmerhebels;
- Fig. 6:: eine perspektivische Detailansicht des Betätigungshebels;
- Fig. 7:: eine perspektivische Detailansicht des Magnetträgers samt zweiter Magnete in einer ersten Ausführungsform;
- Fig. 8:: eine perspektivische Detailansicht des Magnetträgers samt zweiter Magnete in einer zweiten Ausführungsform.

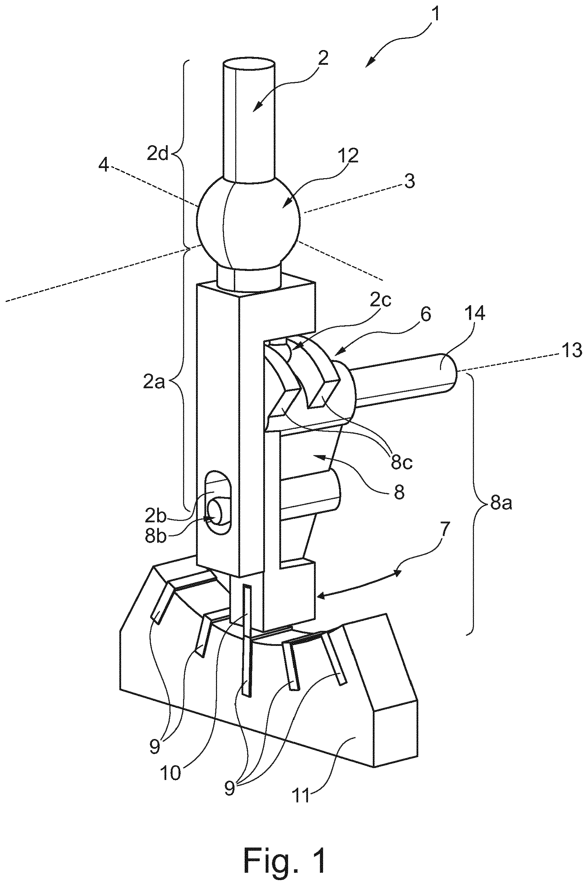

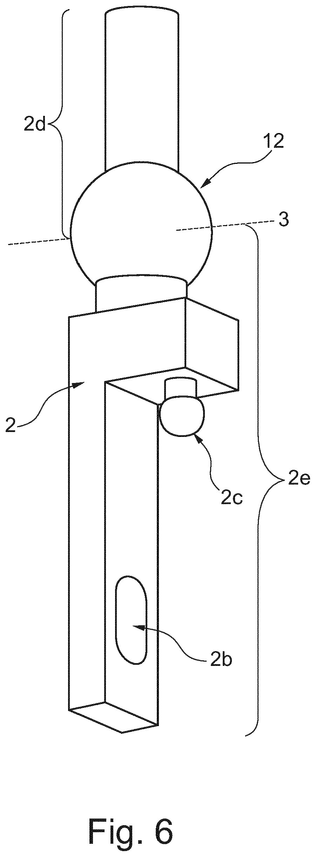

Figur 1 zeigt das erfindungsgemäße Bedienelement 1 in einer ersten Ausführungsform. Das Bedienelement 1 weist einen Betätigungshebel 2 auf, an dem eine Kugel 12 ausgebildet ist. Die Kugel 12 ist in einer nicht dargestellten Kugelpfanne aufgenommen. Durch diese Lagerung ist der Betätigungshebel 2 grundsätzlich frei verschwenkbar, wobei die Freiheitsgrade durch eine nicht dargestellte Kulisse festgelegt sind. Eine erste Gasse der Kulisse erstreckt sich beispielsweise parallel zur Linie 4 und erlaubt somit ein Verschwenken des Betätigungshebels um eine zur Linie 4 senkrechten, ersten Schwenkachse 3. Die Kulisse weist beispielsweise eine dazu parallele, zweite Gasse auf. Ferner ist beispielsweise eine Verbindungsgasse vorgesehen, die die erste und zweite Gasse senkrecht verbindet. Beispielsweise ergibt sich insgesamt betrachtet ein H-förmiger Gassenverlauf in der Kulisse. Das Verschwenken in der Verbindungsgasse erfolgt in einer zur Linie 3 parallelen Richtung und je nach Lage der Verbindungsgasse beispielsweise um die eingezeichnete zweite Schwenkachse 4.Wie Figur 6 zeigt, weist der Betätigungshebel 2 einen dem Bediener zugewandten Abschnitt 2d auf und einen dem Bediener abgewandten, L-förmigen Abschnitt 2e auf, der dem Wirkeingriff mit einem Mitnehmerhebel 8 dient, um so die sich aus der händischen Betätigung ergebenden Bewegungen des Betätigungshebels 2 auf den Mitnehmerhebel 8 zu übertragen.

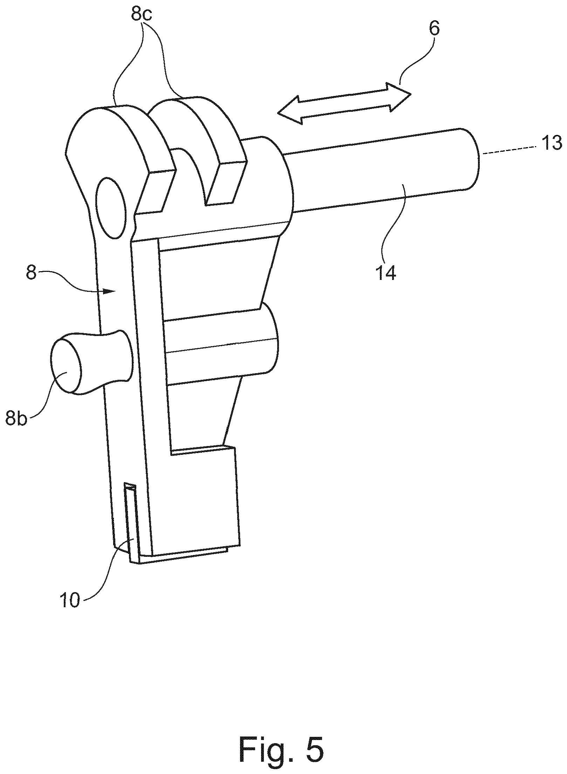

Der im Detail in Figur 5 gezeigte Mitnehmerhebel 8 ist einerseits um eine Schwenkachse 13 entsprechend dem Pfeil 7 aus Figur 1 verschwenkbar, wobei die Schwenkachse 13 parallel zur Linie 3 aus Figur 1 ist. Andererseits ist der Mitnehmerhebel 8 entlang des Zapfens 14 in Richtung des Pfeils 6 parallel zur Linie 13 verschiebbar gelagert, wobei die translatorische Bewegung entlang des Pfeils 6 durch ein Verschwenken des Betätigungshebels 2 um die Achse 4 bewirkt wird. Für die Bewegungskopplung zwischen dem Betätigungshebel 2 und dem Mitnehmerhebel 8 sind zwei Wirkeingriffe vorgesehen. Der erste Wirkeingriff ergibt sich aus dem mitnehmerhebelseitigen Zapfen 8b und der betätigungshebelseitigen Ausnehmungen 2b, in die der Zapfen eingreift. Dieser erste Wirkeingriff dient der schwenkbeweglichen Mitnahme des Mitnehmerhebels 8 um die Achse 13. Der zweite Wirkeingriff ergibt sich aus dem betätigungshebelseitigen Zapfen 2c und der Ausnehmung, die durch die beiden mitnehmerhebelseitig ausgebildeten Flanken 8c gebildet wird und in die der betätigungshebelseitige Zapfen 2c eingreift. Dieser zweite Wirkeingriff dient der verschiebebeweglichen Mitnahme des Mitnehmerhebels 8 entlang des Zapfens 14 in Richtung der Linie 13. Die Zapfen 2c, 8b sind beispielsweise kugelförmig. Die Hebel 2, 8 sind aus Kunststoff gefertigt. Die Zapfen 2c, 8b sind beispielsweise aus einer Zinkdruckgusslegierung gefertigt und in jeweils in den zugehörigen Hebel 2 bzw. 8 eingelassen.

Für die zwei durch die Kulisse gestatteten Bewegungsrichtungen des Betätigungshebels 2 sind bei der vorliegenden Ausführungsformen zwei Wirkeingriffe vorgesehen. Die beiden Wirkeingriff unterscheiden sich bezüglich des relativen Abstandes zur Schwenkachse 13. Der zweite Wirkeingriff erfolgt vergleichsweise nah zur Schwenkachse 13, um das Problem eines Verkanten und somit Verklemmen des Mitnehmerhebels 8 auf dem Zapfen 14 zu minimieren, während der erste Wirkeingriff dazu im Vergleich fern von der Schwenkachse 13 erfolgt, um Hebelkräfte zu erzeugen.

Am äußersten Ende des Mitnehmerhebels 8 ist ein Permanentmagnet 10 in eine schlitzförmige Ausnehmung eingelassen. Der Permanentmagnet 10 vollführt unter Nachfolgung der Schwenkbewegung des Betätigungshebels 2 um die erste Schwenkachse 3 ebenfalls eine Schwenkbewegung, wobei er die Magnetfelder der ruhenden zweiten Magnete 9 ganz oder teilweise durchfährt. Der Abstand, d.h. der Luftspalt zwischen dem ersten Magneten 10 und dem stellungsabhängig jeweils benachbarten zweiten Magneten 9 wird jeweils beibehalten, da die zweiten Magneten auf einem der Schwenkbewegung entsprechenden Kreisbogenangeordnet sind. Die magnetische Wechselwirkung zwischen dem ersten Magnet 10 und dem jeweiligen zweiten Magneten 9 ist haptisch merkbar am Betätigungshebel 2 und erzeugt somit ein Feedback betreffend die jeweilige Stellung. Die magnetische Wechselwirkung kann gemäß einer weiteren Ausgestaltung so gewählt und ausgeprägt sein, dass der nicht betätigte Betätigungshebel 2 an der entsprechenden Stellung magnetisch gehalten wird bzw. verrastet. Die relative Beabstandung der zweiten Magnete 9 entspricht der haptisch merkbaren Stellungen. Die Hebelübersetzung der magentischen Wechselwirkung ergibt sich im Wesentlichen aus der wirksamen Länge des Betätigungshebelarms 2a und der wirksamen Länge des Mitnehmerhebelarms 8a. Der Betätigungshebelarm 2a bestimmt sich aus dem Abstand zwischen der ersten Schwenkachse 3 und dem Berührpunkt zwischen Betätigungshebel 2 und Mitnehmerhebel 8 im Bereich des ersten Wirkeingriffs 2b, 8b. Der Mitnehmerhebelarm 8a bestimmt sich aus dem Abstand zwischen dessen Schwenkachse 13 und dem äußersten Ende des ersten Magneten 10. Das Verhältnis aus wirksamer Betätigungshebelarmlänge und wirksamer Mitnehmerhebelarmlänge ist größer als 1.

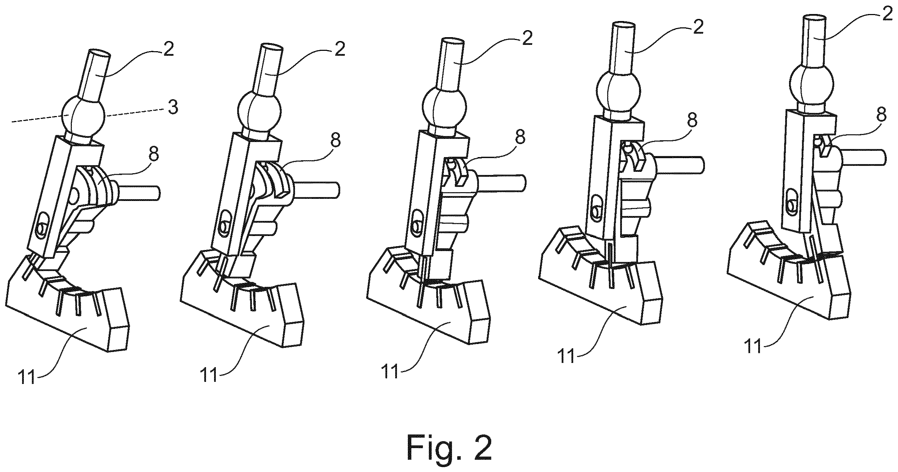

In der Figur 2 ist der Bewegungsablauf der Verschwenkbewegung des Betätigungshebels 2 und der sich daraus ergebenden Verschwenkbewegung des Mitnehmerhebels 8 verdeutlicht, wobei der Magnet 10 in den fünf unterschiedlichen Stellungen mit einem der fünf zweiten, im Magnetträger 11 angeordneten Magnete 9 zusammenwirkt. Die Verschwenkbewegung erfolgt beispielsweise in einer ersten Gasse der Kulisse.

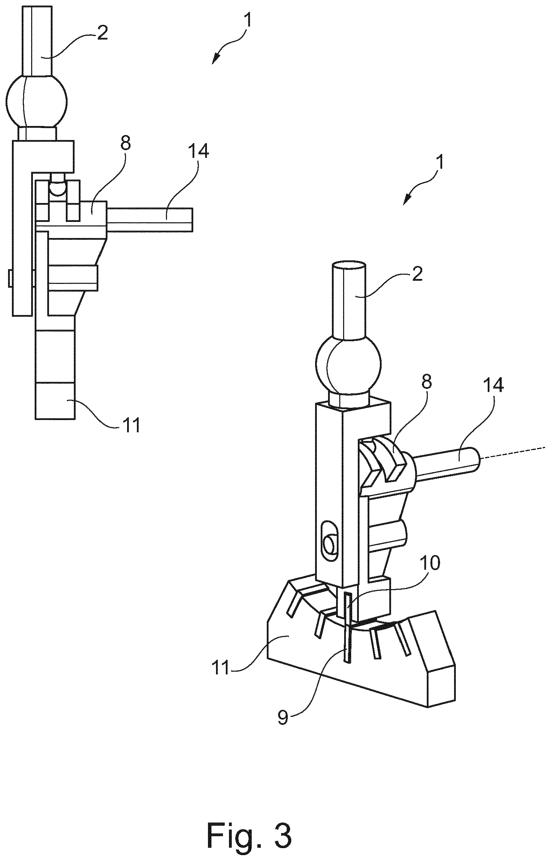

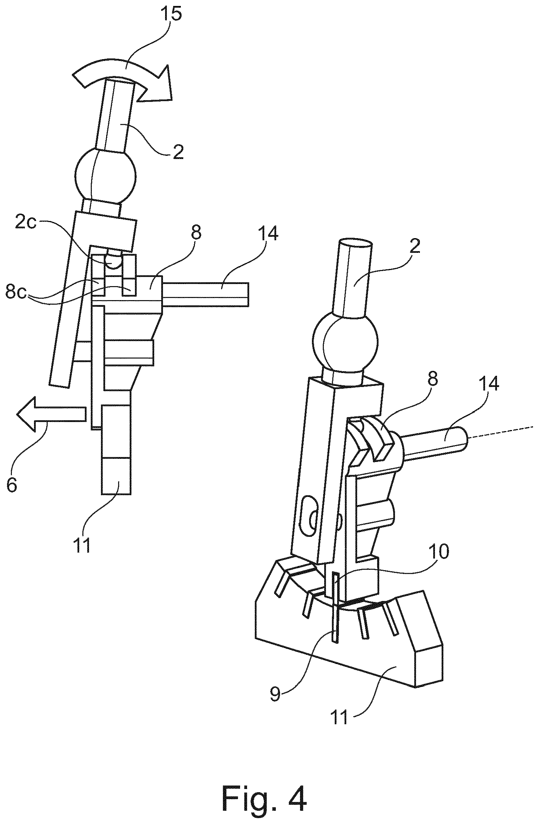

Die Figur 3 zeigt eine perspektivische Darstellung des erfindungsgemäßen Bedienelements 1, wobei sich der Betätigungshebel 2 in der Mittelstellung befindet. In der Mittenstellung sind der Betätigungshebelabschnitt 2e und der Mitnehmerhebel 8 fluchtend angeordnet Anhand der Figur 4 wird die Verschiebebewegung des Mitnehmerhebels 8 verdeutlicht. Durch eine Verschwenkbewegung des Betätigungsteils 2 in Richtung des Pfeils 15 also um die zweite Schwenkachse 4 wird durch den zweiten Wirkeingriff, der sich durch den Eingriff des Zapfens 2c in die durch die Flanken 8c gebildete Ausnehmung ergibt, der Mitnehmerhebel 8 auf dem Zapfen 14 in Richtung des Pfeils 6 verlagert. Der erste Magnet 10 wird aus dem Magnetfeld der zweiten Magneten 9 gerückt. Die das haptische Feedback begründende magnetische Wechselwirkung wird durch die geringere Überlappung der Magnete verringert. Bei einem in dieser Stellungen erfolgenden Verschwenken beispielsweise entlang einer zur ersten Gasse parallel verlaufenden Gasse der Kulisse ist die magnetische Wechselwirkung des ersten Magneten mit dem jeweiligen zweiten Magneten aufgrund der geringeren Überlappung geringer als bei der parallelen Verschwenkbewegung entlang der ersten Gasse.

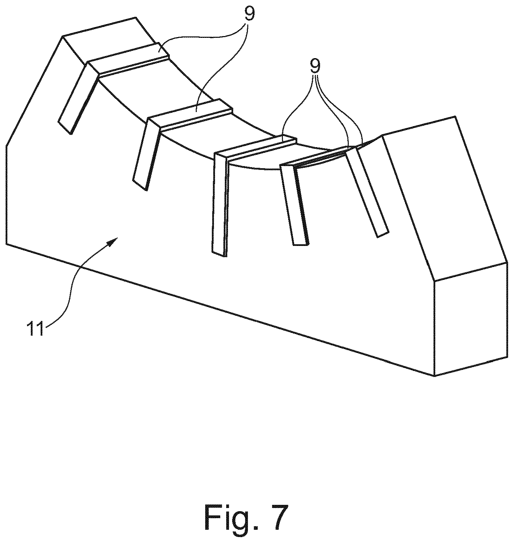

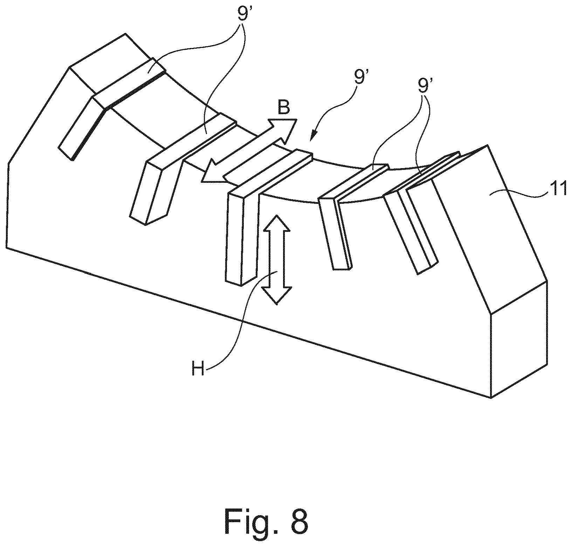

Die Figuren 7 und 8 zeigen im Detail den Magnetträger 11, wobei die gezeigten Ausführungsformen Unterschiede betreffend die Abmessungen der im Träger 11 aufgenommenen zweiten Magnete 9, 9' aufweisen. Die zweiten Magnete 9 können in der Breite B als auch in der Höhe H variieren. Die Höhe H des der Mittenstellung des Mitnehmerhebels 8 bzw. des Betätigungshebels 2 entsprechenden, zweiten Magnets 9 ist größer als die der verbleibenden Magnete.

## Patentansprüche

1. Bedienelement (1), aufweisend:
einen um eine erste Schwenkachse (3) und um eine zweite, zur ersten Schwenkachse (3) orthogonale Schwenkachse (4) schwenkbar gelagerten Betätigungshebel (2) mit einem bezüglich der ersten Schwenkachse (3) dem Bediener zugewandten Abschnitt (2d) und einem dem Bediener abgewandten Betätigungshebelabschnitt (2e);
einen um eine Mitnehmerschwenkachse (13) entlang einer Schwenkrichtung (7) schwenkbar gelagerten Mitnehmerhebel (8);
einen an dem Mitnehmerhebel (8) starr befestigten, ersten Magnet (10), bevorzugt Permanentmagnet,
mehrere ruhende, zweite Magnete (9), bevorzugt Permanentmagnete, die so angeordnet sind, dass beim Schwenken des Mitnehmerhebels (8) der erste Magnet (10) die Magnetfelder der zweiten Magnete (9) durchquert, um eine haptische Rückmeldung am Betätigungshebel (2) zu erzeugen;
wobei ein erster Wirkeingriff (2b, 8b) zwischen Betätigungshebelabschnitt (2a) und Mitnehmerhebel (8) vorgesehen ist, um ein synchrones Schwenken von Betätigungshebel (2) und Mitnehmerhebel (8) zu bewirken,
**dadurch gekennzeichnet, dass** der Mitnehmerhebel (8) senkrecht zu seiner Schwenkrichtung (7) bewegbar gelagert ist, um mittels des ersten Wirkeingriffs oder mittels eines zweiten Wirkeingriffs (2c, 8c) zwischen Betätigungshebelabschnitt (2a) und Mitnehmerhebel (8) ein synchrones Bewegen des Mitnehmerhebels (8) durch Schwenken des Betätigungshebels (2) um die zweite Schwenkachse (4) zu bewirken.

2. Bedienelement (1) gemäß Anspruch 1, wobei der Betätigungshebel um die zweite, zur ersten Schwenkachse (3) orthogonale Schwenkachse (4) schwenkbar mittels Kugel-Pfannen-Lagerung (12) gelagert ist.

3. Bedienelement (1) gemäß dem vorhergehenden Anspruch, wobei der Mitnehmerhebel (8) senkrecht zu seiner Schwenkrichtung (7) translatorisch bewegbar, bevorzugt entlang der Mitnehmerschwenkachse (13) verschiebbar, gelagert ist

4. Bedienelement (1) gemäß einem der vorhergehenden Ansprüche, wobei der Abstand zwischen der Mitnehmerschwenkachse (13) und dem äußersten Endes des ersten Magnets (10) einen Mitnehmerhebelarm (8a) definiert und der Abstand zwischen der ersten Schwenkachse (3) und dem ersten Wirkeingriff (2b, 8b)des Betätigungshebelabschnitts einen Betätigungshebelarm(2a) definiert, und das Hebelverhältnis von Betätigungshebelarm (2a) zum Mitnehmerhebelarm (8a) größer als 1 ist.

5. Bedienelement (1) gemäß einem der vorhergehenden Ansprüche, wobei die zweiten Magnete (9) beabstandet zueinander, entlang der durch die Mitnehmerschwenkachse (13) definierten Schwenkrichtung (7) angeordnet sind.

6. Bedienelement (1) gemäß einem der vorhergehenden Ansprüche, wobei sich wenigstens zwei der zweiten Magnete (9) in ihrer Abmessung (B) in der zur Mitnehmerschwenkachse (13) parallelen Richtung unterscheiden.

7. Bedienelement (1) gemäß einem der vorhergehenden Ansprüche, wobei die zweiten Magnete (9) in einem gemeinsamen Magnetträger (11) angeordnet sind.

8. Bedienelement (1) gemäß einem der vorhergehenden Ansprüche, wobei wenigstens einer, bevorzugt alle, der zweiten Magnete (9) eine zur Mitnehmerschwenkachse (13) parallele Ausrichtung seiner Pole aufweist.

9. Bedienelement (1) gemäß einem der vorhergehenden Ansprüche, wobei der erste Magnet (10) eine Abmessung in der zur Mitnehmerschwenkachse (13) parallelen Richtung aufweist, die gleich oder größer ist als die entsprechende Abmessung des bezüglich dieser Abmessung kleinsten zweiten Magneten (9).

10. Bedienelement (1) gemäß einem der vorhergehenden Ansprüche, wobei die erste Schwenkachse (3) des Betätigungshebels (2) und die Mitnehmerschwenkachse (13) parallel zueinander sind.

11. Bedienelement (1) gemäß einem der vorhergehenden Ansprüche, wobei der Betätigungshebel (2) in einer Kulisse geführt ist.

12. Bedienelement (1) gemäß dem vorhergehenden Anspruch, wobei die Kulisse wenigstens zwei zur ersten Schwenkachse (3) des Betätigungshebels (2) orthogonale , zueinander parallele Gassen aufweist.

13. Bedienelement (1) gemäß dem vorhergehenden Anspruch, wobei die Kulisse ferner eine, bevorzugt nur eine, zur zweiten Schwenkachse (4) orthogonale Verbindungsgasse aufweist.

14. Bedienelement (1) gemäß dem vorhergehenden Anspruch, wobei beim Verschwenken des Betätigungshebels (2) in der Verbindungsgasse der erste Magnet (10) aus oder in das Magnetfeld des nächstbenachbarten zweiten Magnetes (9) bewegt wird.

15. Verwendung des Bedienelements (1) gemäß einem der vorhergehenden Ansprüche in einem Kraftfahrzeug, insbesondere als Gangwahlhebel eines manuellen oder automatischen Getriebes.

## Claims

1. Operating element (1), comprising:
an actuating lever (2) which is mounted pivotably about a first pivot axis (3) and a second pivot axis (4) which is orthogonal with respect to the first pivot axis (3), with a section (2d) which faces the operator with regard to the first pivot axis (3), and with an operating lever section (2e) which faces away from the operator;
a driver lever (8) which is mounted such that it can be pivoted about a driver pivot axis (13) along a pivoting direction (7);
a first magnet (10), preferably a permanent magnet, which is fastened rigidly to the driver lever (8),
a plurality of stationary, second magnets (9), preferably permanent magnets, which are arranged in such a way that the first magnet (10) crosses the magnetic fields of the second magnet (9) during pivoting of the driver lever (8), in order to generate haptic feedback at the actuating lever (2);
a first operating engagement means (2b, 8b) between the actuating lever section (2a) and the driver lever (8) being provided, in order to bring about synchronous pivoting of the actuating lever (2) and the driver lever (8),
**characterized in that** the driver lever (8) is mounted such that it can be moved perpendicularly with respect to its pivoting direction (7), in order, by means of the first operative engagement means or by means of a second operative engagement means (2c, 8c) between the actuating lever section (2a) and the driver lever (8), to bring about a synchronous movement of the driver lever (8) by way of pivoting of the actuating lever (2) about the second pivot axis (4).

2. Operating element (1) according to Claim 1, the actuating lever being mounted by means of a ball and socket bearing (12) such that it can be pivoted about the second pivot axis (4) which is orthogonal with respect to the first pivot axis (3).

3. Operating element (1) according to the preceding claim, the driver lever (8) being mounted such that it can be moved translationally perpendicularly with respect to its pivoting direction (7), preferably such that it can be displaced along the driver pivot axis (13).

4. Operating element (1) according to one of the preceding claims, the spacing between the driver pivot axis (13) and the outermost end of the first magnet (10) defining a driver lever arm (8a), and the spacing between the first pivot axis (3) and the first operating engagement means (2b, 8b) of the actuating lever section defining an actuating lever arm (2a), and the lever ratio of the actuating lever arm (2a) to the driver lever arm (8a) being greater than 1.

5. Operating element (1) according to one of the preceding claims, the second magnets (9) being arranged spaced apart from one another, along the pivoting direction (7) which is defined by way of the driver pivot axis (13).

6. Operating element (1) according to one of the preceding claims, at least two of the second magnets (9) differing in terms of their dimension (B) in the direction which is parallel to the driver pivot axis (13).

7. Operating element (1) according to one of the preceding claims, the second magnets (9) being arranged in a common magnet carrier (11).

8. Operating element (1) according to one of the preceding claims, at least one, preferably all, of the second magnets (9) having an orientation of its/their poles which is parallel to the driver pivot axis (13).

9. Operating element (1) according to one of the preceding claims, the first magnet (10) having a dimension in the direction which is parallel to the driver pivot axis (13), which dimension is greater than or equal to the corresponding dimension of the second magnet (9) which is smallest with regard to the said dimension.

10. Operating element (1) according to one of the preceding claims, the first pivot axis (3) of the actuating lever (2) and the driver pivot axis (13) being parallel to one another.

11. Operating element (1) according to one of the preceding claims, the actuating lever (2) being guided in a slotted guide.

12. Operating element (1) according to the preceding claim, the slotted guide having at least two channels which are parallel to one another and are orthogonal with respect to the first pivot axis (3) of the actuating lever (2).

13. Operating element (1) according to one of the preceding claims, the slotted guide having, furthermore, a connecting channel, preferably only one connecting channel, which is orthogonal with respect to the second pivot axis (4).

14. Operating element (1) according to the preceding claim, the first magnet (10) being moved out of or into the magnetic field of the closest second magnet (9) during pivoting of the actuating lever (2) in the connecting channel.

15. Use of the operating element (1) according to one of the preceding claims in a motor vehicle, in particular as a gear selector lever of a manual or automatic transmission.

## Revendications

1. Elément de commande (1), présentant:
un levier d'actionnement (2) monté de façon pivotante autour d'un premier axe de pivotement (3) et autour d'un second axe de pivotement (4) orthogonal au premier axe de pivotement (3), avec une partie (2d) tournée vers l'opérateur et une partie de levier d'actionnement (2e) détournée de l'opérateur par rapport au premier axe de pivotement (3);
un levier d'élément d'entraînement (8) monté de façon pivotante autour d'un axe de pivotement d'élément d'entraînement (13) le long d'une direction de pivotement (7);
un premier aimant (10), de préférence un aimant permanent, fixé rigidement au levier d'élément d'entraînement (8),
plusieurs deuxièmes aimants fixes (9), de préférence des aimants permanents, qui sont disposés de telle manière que lors du pivotement du levier d'élément d'entraînement (8) le premier aimant (10) traverse les champs magnétiques des deuxièmes aimants (9), afin de produire un message haptique au levier d'actionnement (2);
dans lequel il est prévu entre la partie de levier d'actionnement (2a) et le levier d'élément d'entraînement (8) un premier engagement actif (2b, 8b) pour provoquer un pivotement synchrone du levier d'actionnement (2) et du levier d'élément d'entraînement (8),
**caractérisé en ce que** le levier d'élément d'entraînement (8) est monté de façon mobile perpendiculairement à sa direction de pivotement (7), afin de provoquer au moyen du premier engagement actif ou au moyen d'un second engagement actif (2c, 8c) entre la partie de levier d'actionnement (2a) et le levier d'élément d'entraînement (8) un mouvement synchrone du levier d'élément d'entraînement (8) par pivotement du levier d'actionnement (2) autour du second axe de pivotement (4).

2. Elément de commande (1) selon la revendication 1, dans lequel le levier d'actionnement est monté de façon pivotante autour du second axe de pivotement (4), orthogonal au premier axe de pivotement (3), au moyen d'un appui à rotule (12).

3. Elément de commande (1) selon la revendication précédente, dans lequel le levier d'élément d'entraînement (8) est monté de façon déplaçable en translation perpendiculairement à sa direction de pivotement (7), de préférence de façon coulissante le long de l'axe de pivotement de l'élément d'entraînement (13).

4. Elément de commande (1) selon l'une quelconque des revendications précédentes, dans lequel la distance entre l'axe de pivotement de l'élément d'entraînement (13) et l'extrémité la plus extérieure du premier aimant (10) définit un bras de levier d'élément d'entraînement (8a) et la distance entre le premier axe de pivotement (3) et le premier engagement actif (2b, 8b) de la partie de levier d'actionnement définit un bras de levier d'actionnement (2a), et le rapport de levier du bras de levier d'actionnement (2a) au bras de levier d'élément d'entraînement (8a) est supérieur à 1.

5. Elément de commande (1) selon l'une quelconque des revendications précédentes, dans lequel les deuxièmes aimants (9) sont disposés à distance l'un de l'autre, le long de la direction de pivotement (7) définie par l'axe de pivotement de l'élément d'entraînement (13).

6. Elément de commande (1) selon l'une quelconque des revendications précédentes, dans lequel au moins deux des deuxièmes aimants (9) se différencient par leur dimension (B) dans la direction parallèle à l'axe de pivotement de l'élément d'entraînement (13).

7. Elément de commande (1) selon l'une quelconque des revendications précédentes, dans lequel les deuxièmes aimants (9) sont disposés dans un support d'aimants commun (11).

8. Elément de commande (1) selon l'une quelconque des revendications précédentes, dans lequel au moins un, de préférence tous les deuxième(s) aimant(s) (9) présente(nt) un alignement de ses/leurs pôles parallèle à l'axe de pivotement de l'élément d'entraînement (13).

9. Elément de commande (1) selon l'une quelconque des revendications précédentes, dans lequel le premier aimant (10) présente une dimension dans la direction parallèle à l'axe de pivotement de l'élément d'entraînement (13), qui est égale ou supérieure à la dimension correspondante du deuxième aimant (9) le plus petit par rapport à cette dimension.

10. Elément de commande (1) selon l'une quelconque des revendications précédentes, dans lequel le premier axe de pivotement (3) du levier d'actionnement (2) et l'axe de pivotement de l'élément d'entraînement (13) sont parallèles l'un à l'autre.

11. Elément de commande (1) selon l'une quelconque des revendications précédentes, dans lequel le levier d'actionnement (2) est guidé dans une coulisse.

12. Elément de commande (1) selon l'une quelconque des revendications précédentes, dans lequel la coulisse présente au moins deux voies orthogonales au premier axe de pivotement (3) du levier d'actionnement (2) et parallèles l'une à l'autre.

13. Elément de commande (1) selon l'une quelconque des revendications précédentes, dans lequel la coulisse présente en outre une, de préférence une seule, voie de raccordement orthogonale au deuxième axe de pivotement (4).

14. Elément de commande (1) selon l'une quelconque des revendications précédentes, dans lequel lors du pivotement du levier d'actionnement (2) dans la voie de raccordement le premier aimant (10) est déplacé hors du ou dans le champ magnétique du deuxième aimant le plus proche (9).

15. Utilisation de l'élément de commande (1) selon l'une quelconque des revendications précédentes dans un véhicule automobile, en particulier comme levier de changement de vitesse d'une boîte de vitesses manuelle ou automatique.
